(19) 

Europäisches
Patentamt
European
Patent Office
Office européen
des brevets

(11) **EP 4 443 564 A1**

(12) **EUROPEAN PATENT APPLICATION**
published in accordance with Art. 153(4) EPC

(43) Date of publication:
**09.10.2024 Bulletin 2024/41**

(21) Application number: 23865884.3

(22) Date of filing: **15.09.2023**

(51) International Patent Classification (IPC):
*H01M 4/583* (2010.01)    *H01M 10/0525* (2010.01)
*H01M 4/525* (2010.01)    *G01N 23/207* (2018.01)
*G01N 23/223* (2006.01)    *H01M 4/02* (2006.01)

(52) Cooperative Patent Classification (CPC):
**G01N 23/207; G01N 23/223; H01M 4/02;**
**H01M 4/525; H01M 4/583; H01M 10/0525**

(86) International application number:
**PCT/KR2023/013870**

(87) International publication number:
**WO 2024/058588 (21.03.2024 Gazette 2024/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 16.09.2022 KR 20220116896
15.05.2023 KR 20230062320

(71) Applicant: **LG Energy Solution, Ltd.**
**Seoul 07335 (KR)**

(72) Inventors:
• LEE, Taek Soo
  **Daejeon 34122 (KR)**
• CHO, Jin Ho
  **Daejeon 34122 (KR)**
• YOON, Jong Su
  **Daejeon 34122 (KR)**
• JEON, Shin Wook
  **Daejeon 34122 (KR)**
• KIM, Young Gon
  **Daejeon 34122 (KR)**

(74) Representative: **Plasseraud IP**
**104 Rue de Richelieu**
**CS92104**
**75080 Paris Cedex 02 (FR)**

(54) **NEGATIVE ELECTRODE FOR LITHIUM SECONDARY BATTERY AND LITHIUM SECONDARY BATTERY COMPRISING SAME**

(57)    Disclosed herein relates to a negative electrode for a lithium secondary battery in which lithium precipitation is suppressed, and a lithium secondary battery comprising the same, wherein the negative electrode implements a high degree of orientation of a carbon-based active material contained in a first region of the negative electrode active layer, so that the effect of suppressing lithium precipitation at an end of the negative electrode active layer during charging and discharging of the secondary battery is excellent, so that the lithium secondary battery including the negative electrode active layer has high safety, and has the advantage of being able to charge and discharge for a long time under high rate conditions.

[FIG. 1]

EP 4 443 564 A1

## Description

[Technical Field]

This application claims the benefit of priority based on Korean Patent Application No. 10-2022-0116896, filed on September 16, 2022, and Korean Patent Application No. 10-2023-0062320, filed on May 15, 2023, and the entire contents of the Korean patent application are incorporated herein by reference.

The present invention relates to a negative electrode for a lithium secondary battery with suppressed lithium precipitation during charge and discharge, and a lithium secondary battery including the same.

[Background Art]

Recently, secondary batteries have been widely applied in small devices such as portable electronics, as well as in medium and large devices such as battery packs or power storage in hybrid vehicles or electric vehicles.

These secondary batteries are chargeable/dischargeable power generators consisting of a laminated structure of a positive electrode, separator, and negative electrode, with the positive electrode generally containing lithium metal oxide as a positive electrode active material and the negative electrode containing a carbon-based negative electrode active material such as graphite, so that lithium ions released from the positive electrode are absorbed into the carbon-based negative electrode active material of the negative electrode during charging, and lithium ions contained in the carbon-based negative electrode active material are absorbed into the lithium metal oxide of the positive electrode during discharging, and the charge and discharge are repeated.

One of the factors that determine the performance of a secondary battery is the capacity ratio of the active materials contained in the positive electrode and negative electrode. This capacity ratio can be expressed as the N/P ratio. The N/P ratio is the total capacity of the negative electrode, calculated by considering the capacity per unit area of the negative electrode, divided by the total capacity of the positive electrode, obtained by considering the capacity per unit area of the positive electrode, and is generally controlled to have a value of 1 or more, as it has a significant impact on the safety and capacity of the battery.

In this regard, in recent years, in order to increase the energy density of secondary batteries, there has been a trend to reduce the weight and/or thickness of configurations that do not generate capacity at the electrodes, i.e., the weight and/or thickness of the electrode tabs, exterior materials, separators, current collectors, etc., and to increase the weight and/or thickness of configurations that do generate capacity, i.e., the weight and/or thickness of the electrode active layer. These changes have the effect of increasing the rate of redox reactions at the electrode tabs, which facilitate electron transfer during charging and discharging of the battery.

However, this acceleration of redox reactions promotes degradation near the negative electrode tab, which leads to increased resistance and ultimately capacity degradation in the area adjacent to the negative electrode tab. This means that the region adjacent to the negative electrode tab will experience an inversion, where the N/P ratio becomes less than 1. As such, if the N/P ratio becomes less than 1, when the battery is charged, not all of the lithium ions can intercalate into the negative electrode active material and precipitate on the negative electrode surface to form a dendrite. The likelihood of dendrites is significantly increased when lithium secondary batteries are used for a long period of time under high rate conditions, and the dendrites formed can cause an internal short circuit of the battery, which may compromise the safety of the battery.

[Related Art Document]

[Patent Document]

Korean Patent Laid-Open Publication No. 10-2015-0028457
Korean Patent Laid-Open Publication No. 10-2016-0125720

[Disclosure]

[Technical Problem]

It is an object of the present invention to provide a negative electrode for a lithium secondary battery, and a lithium secondary battery including the negative electrode, in which precipitation of lithium from the end of the negative electrode composite layer is suppressed even when the lithium secondary battery is used for a long time under high rate conditions.

[Technical Solution]

To address the problems described above,
In an exemplary embodiment, the present invention provides a negative electrode for lithium secondary battery comprising:

a negative electrode current collector,
a negative electrode active layer disposed on at least one side of the negative electrode current collector and including a carbon-based negative electrode active material, and
a negative electrode tab that is drawn out at one side of the negative electrode active layer and provided on a non-coating portion that does not include a negative electrode active layer on the negative electrode current collector;
wherein the negative electrode active layer is divided into first region to $n^{th}$ region (where $2 \leq n \leq 10$) having the same length ratio with respect to the total length, based on a thickness direction cross-sectional structure in which the negative electrode tabs is provided on one side, and sequentially arranged from the first side portion from which the negative electrode tabs are withdrawn to the second side portion opposite thereto;
wherein the alignment of the carbon-based negative electrode active material represented by Equation 1 below increases as it progresses from the first region to the $n^{th}$ region:

[Equation 1]

$$S_{60/0} = \frac{I60_{B/A}}{I0_{B/A}}$$

[Equation 2]

$$I60_{B/A} = \frac{I60_B}{I60_A}$$

[Equation 3]

$$I0_{B/A} = \frac{I0_B}{I0_A}$$

in Equation 1 to Equation 3,

$S_{60/0}$ represents a value of a ratio of a ratio of a peak intensity ($I60_{B/A}$) at an incident angle of 60° of the X-ray to a ratio of a peak intensity ($I0_{B/A}$) at an incident angle of 0° of the X-ray,
$I60_A$ represents an intensity of a strongest peak present at $286 \pm 1.0$ eV, at the incidence angle of 60°,
$I60_B$ represents an intensity of a strongest peak present at $292.5 \pm 1.0$ eV at the incidence angle of 60°,
$I0_A$ represents an intensity of a strongest peak at $286 \pm 1.0$ eV at the incidence angle of 0°,
$I0_B$ represents an intensity of a strongest peak present at $292.5 \pm 1.0$ eV at the incidence angle of 0°.

Here, the first region of the negative electrode active layer may have an alignment ($S_{60/0}$) of 0.01 to 1.0 for a carbon-based negative electrode active material represented by Equation 1.

In addition, in the negative electrode active layer, the alignment of the carbon-based negative electrode active material according to Equation 4 below may increase as it progresses from the first region to the $n^{th}$ region:

$$[\text{Equation 4}]$$

$$O.I = I_{004}/I_{110}$$

in Equation 4,

$I_{004}$ represents the area of the peak representing the (0,0,4 ) crystal face in the X-ray diffraction spectroscopy (XRD) measurement of the negative active layer,
$I_{110}$ represents the area of the peak representing the (1,1,0 ) crystal face in an X-ray diffraction (XRD) measurement of the negative active layer.

In addition, the carbon-based negative electrode active material contained in the $n^{th}$ region may have an alignment according to Equation 4 that is 110% to 300% of the alignment of the carbon-based negative electrode active material contained in the first region.

Moreover, the first region of the negative electrode active layer may have an average alignment ($0.I_{1st}$) of 0.1 to 0.6 of the carbon-based negative electrode active material according to Equation 4.

Furthermore, the negative electrode active layer may have a gradient in which the alignment ($S_{60/0}$) of the carbon-based negative electrode active material according to Equation 1 and/or the alignment (O.I) of the carbon-based negative electrode active material according to Equation 4 has an increasing gradient as it progresses from the first region to the $n^{th}$ region, or tends to stepwise increase at predetermined intervals.

In addition, the first region of the negative electrode active layer may have a ratio ($I_{004}/I_{002}$) of the intensity of the peak representing the (0,0,4 ) crystal face to the intensity of the peak representing the (0,0,2 ) crystal face of greater than or equal to 0.04 when measured by X-ray diffraction spectroscopy (XRD).

Meanwhile, the carbon-based negative electrode active material may include one or more of the following: natural graphite and synthetic graphite, and here, the carbon-based negative electrode active material may have a sphericity of 0.75 or greater.

Furthermore, in an exemplary embodiment, the present invention provides a lithium secondary battery including: an electrode assembly including a positive electrode, a negative electrode according the above-described present invention, and a separator disposed between the positive electrode and negative electrode.

Here, the positive electrode may include a positive electrode active layer provided on at least one side of a positive electrode current collector and including at least one positive electrode active material selected from lithium metal oxide represented by Chemical Formula 1 and Chemical Formula 2 below:

[Chemical Formula 1]     $Li_x[Ni_yCo_zMn_wM^1_v]O_2$

[Chemical Formula 2]     $LiM^2_pMn_{1-p}O_4$

in Chemical Formula 1 and Chemical Formula 2,

$M^1$ is one or more of the following elements of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are $1.0 \le x \le 1.30$, $0.5 \le y < 1$, $0 < z \le 0.3$, $0 < w \le 0.3$, and $0 \le v \le 0.1$, respectively, and y+z+w+v=1,
$M^2$ is Ni, Co, or Fe, and
p is $0.05 \le p \le 1.0$.

Specifically, the positive electrode active material may include one or more selected from the group consisting of $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, $LiNi_{0.3}Mn_{1.7}O_4$, $LiFePO_4$, $LiFe_{0.8}Mn_{0.2}PO_4$, and $LiFe_{0.5}Mn_{0.5}PO_4$.

In addition, the electrode assembly may be a stack-type electrode assembly; a zigzag electrode assembly; or a zigzag-stacked electrode assembly.

[Advantageous Effects]

The negative electrode for a lithium secondary battery according to the present invention not only exhibits high efficiency during charging and discharging of the secondary battery, especially during prolonged charging and discharging under high rate conditions, by implementing a low alignment ($S_{60/0}$ and/or O.I) of the carbon-based negative electrode active material contained near the negative electrode tab where the degree of degeneration of the negative electrode active layer is relatively high to reduce electrode resistance, but also has an excellent effect of suppressing lithium precipitation at the end of the negative electrode active layer, and thus has the advantage of excellent safety of the battery.

[Brief Description of the Drawings]

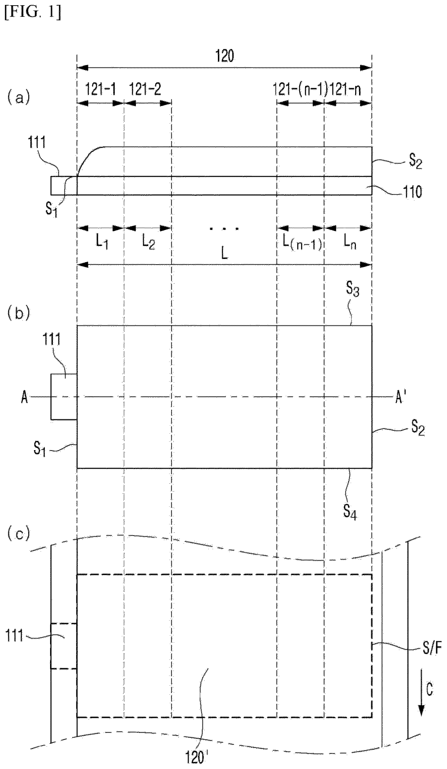

FIG. 1 is an image illustrating the structure of a negative electrode manufactured in an exemplary embodiment according to the present invention, where (a) of FIG. 1 is a cross-sectional view of the negative electrode, (b) of FIG. 1 is a plan view of the negative electrode, and (c) of FIG. 1 is a plan view indicating the position of the negative electrode in the negative electrode slurry state during manufacture of the negative electrode.

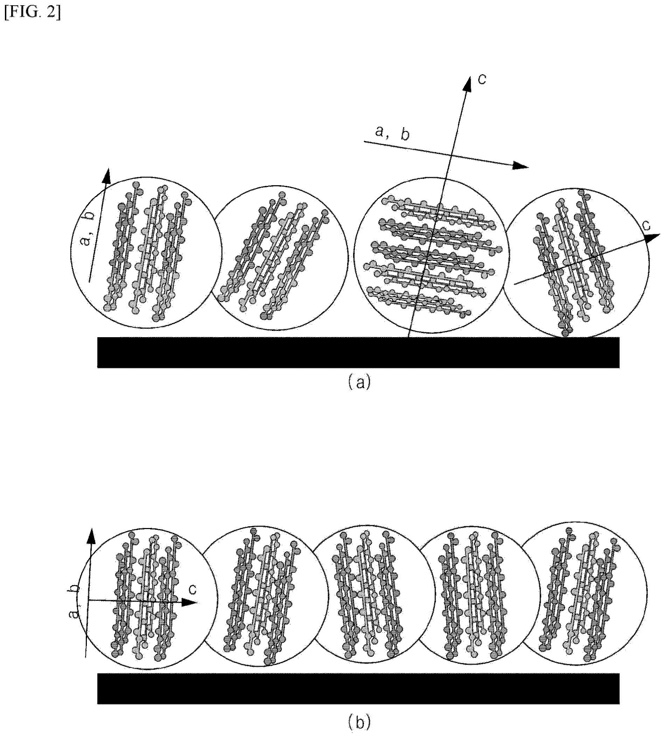

FIG. 2 is an image showing the alignment of the crystal faces of graphite in the a-b axis according to whether a magnetic field is applied to the negative electrode slurry during the formation of the negative electrode active layer, where (a) of FIG.2 is a case where the crystal faces of graphite are not aligned because no magnetic field is applied, and (b) of FIG.2 is a case where the crystal faces of graphite are aligned because a magnetic field is applied.

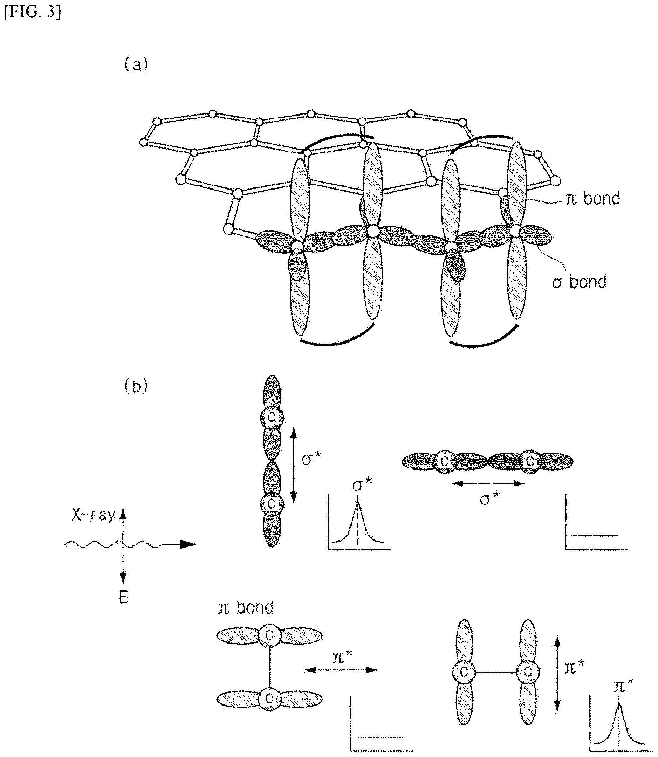

FIG. 3 is an image showing the trend of absorption peaks by type and position of each orbital according to the X-ray incident angle in near edge X-ray absorption fine structure (NEXAFS) spectroscopy, where (a) of FIG.3 shows the type and position of orbits forming double bonds in graphite, and (b) of FIG. 3 shows the peak shape by position of each orbital at X-ray incident.

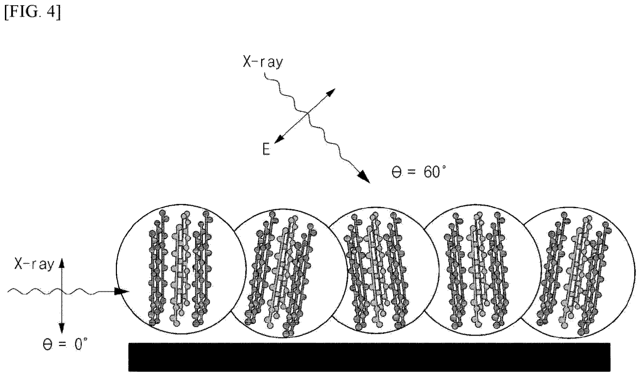

FIG. 4 is an image of an X-ray incident angle during near edge X-ray absorption fine structure (NEXAFS) spectroscopy on a negative electrode manufactured in an exemplary embodiment according to the present invention.

[Detailed Description of the Preferred Embodiments]

The present invention is subject to various modifications and can have many different embodiments, and specific embodiments will be described in detail in the following description.
However, this is not intended to limit the present invention to any particular embodiment and should be understood to include all modifications, equivalents, or substitutions that are within the scope of the idea and technology of the present invention.
Throughout this specification, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof.
Further, when a portion such as a layer, a film, an area, a plate, or the like is referred to as being "on" another portion, this includes not only the case in which the portion is "directly on" another portion but also the case in which still another portion is interposed therebetween. In contrast, when a portion such as a layer, a film, an area, a plate, or the like is referred to as being "below" another portion, this includes not only the case in which the portion is "directly below" another portion but also the case in which still another portion is interposed therebetween. In addition, to be disposed "on" in the specification of the present invention may include the case disposed at the lower portion as well as the upper portion.
Further, in the present invention, "comprising as a major component" may mean comprising 50 wt% or more (or 50 % or more by volume), 60 wt% or more (or 60 % or more by volume), 70 wt% or more (or 70 % or more by volume), 80 wt% or more (or 80 % or more by volume), 90 wt% or more (or 90 % or more by volume), or 95 wt% or more (or 95 % or more by volume) of the defined component relative to the total weight (or total volume). For example, "comprising graphite as the primary component of the negative electrode active material" may mean comprising at least 50 wt%, at least 60 wt%, at least 70 wt%, at least 80 wt%, at least 90 wt%, or at least 95 wt% graphite based on the total weight of the negative electrode active material, and in some cases may mean that the entire negative electrode active material is composed of graphite and comprises 100% graphite.
Furthermore, in the present invention, "cross-sectional structure" means a structure having a cut surface perpendicular to the winding direction of the wound electrode assembly. In this case, the cut surface may be the same as a surface cut parallel to the process direction in negative electrode manufacturing; or a surface cut in the longitudinal direction of the negative electrode slurry applied to form the negative electrode active layer. Furthermore, the cross-sectional structure may refer to a structure of a surface in which the negative electrode active layer is cut in the thickness direction, but in a direction proceeding from one side where the negative electrode tab is formed to the opposite side thereof.

Also, as used herein, "carbon-based negative electrode active material is oriented" or "carbon-based negative electrode active material is aligned" means that certain crystal faces (e.g., the ab-axis crystal faces of graphite) representing the two-dimensional planar structure of the carbon-based negative electrode active material comprising the negative electrode active material particles are arranged to have a predetermined slope relative to the surface of the negative electrode current collector, as shown in (b) of FIG. 2. This may differ from the carbon-based negative electrode active material particles themselves, as shown in (a) of FIG. 2, which are oriented only within the negative electrode active layer in a predetermined direction and not having directionality with respect to the negative electrode current collector.

In addition, "highly oriented carbon-based negative electrode active material" may mean that certain crystal faces (e.g., a-b axis crystal faces of graphite) representing the two-dimensional planar structure of the carbon-based negative electrode active material contained in the negative electrode active layer have a high frequency of having a predetermined slope relative to the negative electrode collector surface. It may also mean, in some cases, that the crystal faces of the carbon-based negative electrode active material contained in the negative electrode active layer are arranged at a high angle (e.g., a near-vertical angle, greater than 45°; specifically greater than 60°) relative to the surface of the negative electrode current collector.

In addition, "high alignment of the carbon-based negative electrode active material" means that the "alignment ($S_{60/0}$ and/or O.I)" referred to herein has a large value, which may mean that certain crystal faces (e.g., a-b axis crystal faces of graphite) representing the two-dimensional planar structure of the carbon-based negative electrode active material contained in the negative electrode active layer are arranged at a low angle (e.g., less than 45°) relative to the surface of the negative electrode collector. Conversely, "low alignment of the carbon-based negative electrode active material" may mean that the "alignment ($S_{60/0}$ and/or O.I)" has a small value, such that the crystal faces of the carbon-based negative electrode active material contained in the negative electrode active layer are arranged at a high angle (e.g., an angle close to vertical, greater than 45°; specifically greater than 60°) relative to the surface of the negative electrode current collector.

Moreover, as used herein, "average particle diameter ($D_{50}$)" means the particle diameter at which the sum value is 50% in the particle diameter distribution of the particles, which is also referred to as the median diameter.

Hereinafter, the present invention will be described in more detail.

Negative electrode for lithium secondary battery

In an exemplary embodiment, the present invention provides a negative electrode for a lithium secondary battery comprising:
a negative electrode current collector,

> a negative electrode active layer disposed on at least one side of the negative electrode current collector and including a carbon-based negative electrode active material, and
> a negative electrode tab that is drawn out at one side of the negative electrode active layer and provided on a non-coating portion that does not include a negative electrode active layer on the negative electrode current collector;
> wherein the negative electrode active layer is divided into first region to $n^{th}$ region (where $2 \leq n \leq 10$) having the same length ratio with respect to the total length, based on a thickness direction cross-sectional structure in which the negative electrode tabs is provided on one side, and sequentially arranged from the first side portion from which the negative electrode tabs are withdrawn to the second side portion opposite thereto;
> wherein the alignment of the carbon-based negative electrode active material represented by Equation 1 below increases as it progresses from the first region to the $n^{th}$ region:

$$[Equation\ 1]$$

$$S_{60/0} = \frac{I60_{B/A}}{I0_{B/A}}$$

The negative electrode for a lithium secondary battery according to the present invention includes a negative electrode active layer including a carbon-based negative electrode active material on at least one surface of the negative electrode current collector, and a negative electrode tab located at one end of the surface of the negative electrode current collector where the negative electrode active layer is provided, and provided at a non-coating portion where the negative electrode active layer is not arranged.

In this case, the negative electrode active layer is a layer that embodies the electrical activity of the negative electrode. The negative electrode active layer includes a carbon-based negative electrode active material as the negative electrode active material to realize electrical activity through a reversible redox reaction during charging and discharging of the battery. Specifically, the carbon-based negative electrode active material refers to a material having carbon atoms as a main component, and such a carbon-based negative electrode active material may include graphite. The graphite may include one or more of natural graphite and synthetic graphite. For example, the carbon-based negative electrode active material may include natural graphite or synthetic graphite alone, or in some cases, a mixture of natural and synthetic graphite. In this case, the ratio of natural graphite to artificial graphite may be 5-40:60-95, or 10-30:70-90, based on weight. By including natural graphite and synthetic graphite in the mixing ratio as described above, the carbon-based negative electrode active material can strengthen the adhesion of the negative electrode current collector and the negative electrode active layer, while achieving a high orientation of the carbon-based negative electrode active material to the surface of the negative electrode current collector.

The carbon-based negative electrode active material is preferably a spherical graphite assembly formed by aggregation of a plurality of flake graphite. The flake graphite can be natural graphite, artificial graphite, mesophase calcined carbon (bulk mesophase) made from tar and pitch, graphitized cokes (raw coke, green coke, pitch coke, needle coke, petroleum coke, etc.), and the like, and in particular, it is preferred to be assembled using a plurality of highly crystalline natural graphite. In addition, one graphite assembly may be formed from 2 to 100 pieces of flake-shaped graphite, preferably 3 to 20 pieces.

Such carbon-based negative electrode active materials, specifically graphite, may have a spherical particle shape, wherein the sphericity of the graphite particles may be greater than or equal to 0.75, such as 0.75 to 1.0; 0.75 to 0.95; 0.8 to 0.95; or 0.90 to 0.99. Here, "sphericity" may mean the ratio of the shortest diameter (short diameter) to the longest diameter (long diameter) of any diameter passing through the center of the particle, wherein a sphericity of 1 means that the particle has a spherical shape. The sphericity may be determined by measuring the particle shape using a particle shape analyzer, or by measuring the shape of the particle using a scanning electron microscope (SEM), an energy dispersive spectrometer, or the like, and then analyzing the measured results.

The present invention has the advantage that by realizing the shape of the carbon-based negative electrode active material close to a spherical shape, a high electrical conductivity of the negative electrode active layer can be realized, thus improving the capacity of the battery, and the specific surface area per unit weight of the negative electrode active material can be increased, thus improving the adhesion between the negative electrode active layer and the current collector.

Further, the carbon-based negative electrode active material may have an average particle diameter ($D_{50}$) of 0.5 $\mu$m to 10 $\mu$m, and more specifically, may have an average particle diameter ($D_{50}$) of 2 $\mu$m to 7 $\mu$m; 0.5 $\mu$m to 5 $\mu$m; or 1 $\mu$m to 3 $\mu$m.

It may be advantageous to have a smaller the average particle diameter of a near-spherical carbon-based negative electrode active material so as to maximize the disorder in the swelling direction for each particle to prevent the particles from swelling due to the charging of lithium ions. However, if the particle diameter of the carbon-based negative electrode active material is less than 0.5 $\mu$m, a large amount of binder is required due to the increase in the number of particles per unit volume, and the sphericity and sphericalization yield may decrease. On the other hand, if the maximum particle diameter exceeds 10 $\mu$m, the expansion rate of the negative electrode active material increases significantly during charge and discharge of the secondary battery, which can significantly reduce the cycle characteristics due to the poor cohesion between the negative electrode active material particles and the cohesion between the negative electrode active material particles and the current collector as the charge and discharge are repeated.

Furthermore, the negative electrode active layer may be prepared by applying a negative electrode slurry including a carbon-based negative electrode active material to at least one surface of the negative electrode current collector, followed by drying and rolling, in order to implement electrical activity via a reversible redox reaction during charging and discharging of the secondary battery.

FIG. 1 is a structural diagram illustrating the structure of a negative electrode according to the present invention, where (a) of FIG. 1 is a cross-sectional view of the negative electrode, (b) of FIG. 1 is a plan view of the negative electrode, and (c) of FIG. 1 is a plan view illustrating the position of the negative electrode in the negative electrode slurry state during manufacture of the negative electrode.

Referring to FIG. 1, the negative electrode according to the present invention includes a negative electrode active layer 120 formed on at least one side of the negative electrode current collector 110. Furthermore, the negative electrode includes a negative electrode tab 111 electrically connected with a negative electrode terminal at one end of the negative electrode current collector 110 on which the negative electrode active layer 120 is provided, the negative electrode tab 111 being provided on a non-coating portion that does not include the negative electrode active layer 120 for electrically connecting with a negative electrode tab of an adjacent other negative electrode and/or a negative electrode terminal of an adjacent other negative electrode during electrode assembly for the manufacture of a secondary battery.

Here, the negative electrode active layer 120 includes a first side portion S1 of the negative electrode active layer from which the negative electrode tab 111 is withdrawn relative to the surface as shown in (a) and (b) of FIG. 1, a second side portion $S_2$ disposed on the other side of the first side portion, and a third side portion $S_3$ and a fourth side portion S4 connected with the first side portion $S_1$ and second side portion $S_2$ to form a single surface. Here, the second side portion $S_2$ to the fourth side portion $S_4$ may be slit (S/F) after drying of the negative electrode slurry 120' in the manufacture of the negative electrode, such that the ends have the shape of a cut surface, as shown in (c) of FIG. 1, but are not limited thereto.

Furthermore, the negative electrode active layer 120 is divided into a plurality of regions, and the carbon-based negative electrode active material contained in the regions may have different slopes of the a-b axis crystal faces of the carbon-based negative electrode active material with respect to the negative electrode current collector surface. Specifically, the negative electrode active layer 120 is divided into a first region 121-1 to a $n^{th}$ region (121-n, wherein $2 \leq n \leq 10$) that have the same length ratio ($L_1 = L_2 = ... -L_{n-1}-L_n$) with respect to the total length (L) based on the thickness direction cross-sectional structure in which negative electrode tab 111 is provided on one side as in (a) of FIG. 1, and are sequentially arranged from a first side portion $S_1$ from which the negative electrode tab 111 is withdrawn to a second side portion $S_2$ opposite thereto. For example, when the negative electrode active layer 120 includes three regions (n=3), the first region 121-1, the second region 121-2, and the third region 121-3 are sequentially arranged from the first side portion $S_1$ from which the negative electrode tab 111 is withdrawn to the second side portion $S_2$ opposite thereto, and the length of each region may be the same ($L_1 = L_2 = L_3$).

By dividing the negative electrode active layer 120 into a plurality of regions having the same length ratio, the present invention can control the deviation of the alignment of the carbon-based negative electrode active material contained in any region from the alignment of the carbon-based negative electrode active material contained in the region adjacent to that region to be small. A large deviation in the alignment of the carbon-based negative electrode active material in a region compared to its neighboring region indicates a large change in the slope of the a-b axis crystal plane of the carbon-based negative electrode active material with respect to the negative electrode current collector surface. Such a negative electrode has low electrolyte impregnation, and the mobility of lithium ions during high-rate charging and discharging may be reduced, resulting in reduced electrical properties of the negative electrode. Therefore, by dividing the negative electrode active layer into a plurality of regions having the same length ratio, the present invention can control the deviation of the alignment of the carbon-based negative electrode active material between each region to a small extent.

To this end, the negative electrode active layer may be divided into two to ten ($2 \leq n \leq 10$) regions, more specifically, three to ten ($3 \leq n \leq 10$); five to ten ($5 \leq n \leq 10$); seven to ten ($7 \leq n \leq 10$); two to eight ($2 \leq n \leq 8$); two to six ($2 \leq n \leq 6$); or two to four ($2 \leq n \leq 4$).

Furthermore, by controlling the alignment of the carbon-based negative electrode active materials included in the negative electrode active layer by each region, the present invention can suppress the precipitation of lithium from the end of the negative electrode composite layer even when the lithium secondary battery is used for a long time under high rate conditions. Specifically, in the negative electrode active layer according to the present invention, the alignment ($S_{60/0}$ and/or O.I) of the carbon-based negative electrode active material contained in the negative electrode active layer can be increased as it proceeds from the first side portion $S_1$ where the negative electrode tab is withdrawn to the second side portion $S_2$ on the other side thereof, that is, as it proceeds from the first region 121-1 to the $n^{th}$ region 121-n.

In general, redox reactions tend to be accelerated at the electrode tabs where electrons can move freely during charging and discharging of the battery, resulting in increased reaction rates. This acceleration of redox reactions leads to accelerated degradation near the negative electrode tab, which induces an increase in electrical resistance and ultimately leads to capacity degradation in the region adjacent to the negative electrode tab. As a result, the region of the negative electrode active layer adjacent to the negative electrode tab will experience a reversal phenomenon in which the N/P ratio becomes less than 1. As such, when the N/P ratio becomes less than 1, lithium precipitates on the negative electrode surface to form a dendrite. This dendrite is especially likely to occur when the lithium secondary battery is used for a long period of time under high rate conditions, and the dendrite can cause an internal short circuit of the battery, thus compromising the safety of the battery.

However, the present invention can lower the electrical resistance of the region adjacent to the negative electrode tab in the negative electrode active layer by controlling the slope of the a-b axis crystal face of the carbon-based negative electrode active material with respect to the surface of the negative electrode current collector to be larger the closer it is to the first side portion of the negative electrode active layer provided on the side from which the negative electrode tab is withdrawn, thereby preventing the dendritic precipitation of lithium from the negative electrode surface during charge and discharge. Specifically, the negative electrode active layer may be such that the a-b axis crystal faces of the carbon-based negative electrode active material contained in the first side portion from which the negative electrode tab is withdrawn, and more specifically in the first region most adjacent to the negative electrode tab, are closely aligned perpendicular to the negative electrode current collector. Furthermore, as the negative electrode active layer progresses from the first region to the $n^{th}$ region (where $2 \leq n \leq 10$), the separation distance from the negative electrode tab increases, and the slope of the a-b axis crystal face of the carbon-based negative electrode active material contained in each region tends to decrease as the separation distance from the negative electrode tab increases. This decrease in the slope of the a-b axis crystal face tilt of the carbon-based negative electrode active material (i.e., an increase in the alignment ($S_{60/0}$ and/or O.I) of the carbon-based negative electrode active material) may represent a stepwise decrease (or increase in alignment) or a decreasing gradient (or an increasing gradient in alignment) as it progresses from the first region to the $n^{th}$ region (where $2 \leq n \leq 10$).

Here, "the carbon-based negative electrode active material is arranged nearly perpendicular to the negative electrode current collector" may mean that the crystal faces of the carbon-based negative electrode active material comprising the spherical particles, specifically the a-b axis crystal faces representing the plane direction of the graphite having a two-dimensional structure among the crystal faces of the graphite, are arranged at a slope perpendicular to the surface of the negative electrode current collector. In this case, the plane direction of the graphite (i.e., the a-b axis crystal face direction) may have an average slope of 60° to 120° with respect to the negative electrode current collector, preferably 70° to 110°; or 80° to 100°.

Furthermore, the alignment of the carbon-based negative electrode active material may be applied by any method conventionally applied in the art without being particularly limited, but more specifically, after applying the negative electrode slurry containing the carbon-based negative electrode active material to the surface of the negative electrode current collector, a magnetic field is applied to the surface of the negative electrode slurry from the upper and lower portion of the negative electrode slurry, but as the position of the negative electrode active layer changes from the first region to the $n^{th}$ region (where $2 \leq n \leq 10$), such that the magnetic field intensity and/or the application time is reduced, thereby the alignment of the carbon-based negative electrode active material can be induced to increase as it progresses from the first region to the $n^{th}$ region.

As one example, if the negative electrode active layer is divided into a total of three regions (n=3) as it progresses from the first side portion where the negative electrode tab is withdrawn to the second side portion, a magnetic field may be applied to the negative electrode slurry surface corresponding to the first region, the second region, and the third region at the time of manufacturing the negative electrode active layer in a stepwise decreasing intensity of 2.0 T (Tesla), 1.0 T, and 0.5 T, respectively. In this case, the alignment ($S_{60/0}$ and/or O.I) of the carbon-based negative electrode active material may be implemented in the order of first region < second region < third region.

As another example, if the negative electrode active layer is divided into a total of five regions (n=5) as it progresses from the first side portion from which the negative electrode tab is withdrawn to the second side portion, a magnetic field may be applied from 2.0 T→0.5 T in the preparation of the negative electrode active layer to have a magnetic field intensity gradient on the surface of the negative electrode slurry corresponding to the first region to the fifth region. In this case, the alignment ($S_{60/0}$ and/or O.I) of the carbon-based negative electrode active material may implement the alignment gradient in the order of the first region < second region < third region < fourth region < fifth region.

In the case of the present invention, the magnetic field application to the negative electrode slurry may be performed for 1 second to 60 seconds at an intensity of 0.5 T to 2.0 T, and more specifically, may be performed for 1 second to 30 seconds; or 1 second to 20 seconds at an intensity of 0.5 T to 1.0 T; or 0.5 T to 1.5 T; or 1.0 T to 2.0 T; or 0.8 T to 1.5 T; or 0.8 T to 1.2 T. By controlling the magnetic field strength and application time applied to the negative electrode slurry as described above, differences in the alignment ($S_{60/0}$ and/or O.I) of different regions of the carbon-based negative electrode active material can be appropriately realized. This prevents an increase in electrical resistance in the regions adjacent to the negative electrode tabs during charge and discharge, thus preventing the N/P ratio from reversing.

Furthermore, the magnetic field strength may be applied such that the deviation of the magnetic field strength between any region of the negative electrode slurry and the region adjacent to the region is not large. For example, the magnetic field strength applied to any region may have a deviation of 0.01 T to 0.5 T from the magnetic field strength applied to the region adjacent to the region, more specifically, a deviation of 0.01 T to 0.3 T; 0.01 T to 0.1 T; 0.1 T to 0.5 T; or 0.2 T to 0.3 T. The applied magnetic field strength affects the alignment of the carbon-based negative electrode active material. Therefore, increasing the magnetic field strength deviation of any region and the region adjacent to the region may increase the alignment deviation of the carbon-based negative electrode active material contained therein. At points where the alignment deviation of the carbon-based negative electrode active material is large, the impregnability of the electrolyte may be reduced, and the mobility of the lithium ions may be reduced during high-rate charging and discharging. Therefore, these problems can be overcome by controlling the magnetic field strength deviation in any region and in the region adjacent to that region during magnetic field application of the negative electrode slurry.

Meanwhile, the alignment of the carbon-based negative electrode active materials contained in the negative electrode active layer can be determined by molecular orientation and/or crystal structure analysis of the carbon-based negative electrode active materials.

In one example, the negative electrode active layer may be such that the carbon-based negative electrode active material is aligned substantially perpendicular to the negative electrode current collector such that, upon near edge X-ray absorption fine structure (NEXAFS) spectroscopy analysis, the value according to Equation 1 below increases as the measurement position changes from the first region to the $n^{th}$ region (where $2 \leq n \leq 10$):

[Equation 1]

$$S_{60/0} = \frac{I60_{B/A}}{I0_{B/A}}$$

(In Equation 1, $S_{60/0}$ represents the value of a ratio of the ratio of peak intensity ($I60_{B/A}$) when the X-ray is incident at an angle of 60° to the ratio of peak intensity ($I0_{B/A}$) when the X-ray is incident at an angle of 0° in the analysis of near-end X-ray absorption fine structure (NEXAFS) spectroscopy).

Unlike X-ray photoelectron spectroscopy (XPS), which measures the bonding energy between the atoms comprising a compound, Near Edge X-ray Absorption Fine Structure (NEXAFS) spectroscopy can only reflect the local structure in the vicinity of carbon atoms containing excited valence electrons and the surface structure of the measured carbon-based negative electrode active material particles. Thus, by utilizing the spectra obtained by NEXAFS spectroscopic analysis of the negative electrode active layer, the present invention can measure the alignment of the carbon-based negative electrode active materials contained in the negative electrode active layer.

Specifically, when the carbon atom (C) of a carbon-based negative electrode active material is irradiated with X-rays, the occupied electrons (K-angle valence electrons) in the valence level (1s orbital) of the carbon atom absorb the X-ray energy and are excited to various conjugated molecular orbitals in the unoccupied state, and NEXAFS spectroscopic analysis utilizes the observed absorption spectra.

In the case of graphite, a carbon-based negative electrode active material, these resonance molecular orbitals are: i) the $\pi^*$ orbital, which is attributed to the antibonding orbitals of sp2 bonds, reflecting the crystallinity of graphite (e.g., basal or oriented), ii) the $\sigma^*$ orbital, which is attributed to the antibonding orbitals of the sp3 bonds that reflect disorder in the crystallinity (e.g., edges or disoriented), and iii) the Rydberg orbital, which is attributed to semi-conjugated orbitals such as C-H or C-O bonds.

Carbon-based negative electrode active materials, such as graphite, have a crystal structure in which the carbon atoms are stacked in a hexagonal network structure (see (a) in FIG. 3) by sp2 bonds. Here, the two-dimensional plane of the hexagonal faces (the ab-axis crystal face) is the base plane, and the plane where the ends of the hexagonal network appear (the c-axis crystal plane) is the edge plane. On the edge plane of carbon-based negative electrode active materials, there is a possibility that -COOH, -C=O, etc. exist on the terminal carbon, so the sp3 bond ratio may be high. Therefore, the crystal face orientation and/or alignment of a carbon-based negative electrode active material can be analyzed by analyzing the state of the sp2 orbital of the carbon atoms on each crystal face of the carbon-based negative electrode active material.

The NEXAFS spectroscopic analysis can be performed by an all-electron quantitative method in which X-rays with a fixed angle of incidence are irradiated to the negative electrode active layer, and the energy of the irradiating X-rays ranges from 280 eV to 320 eV, while measuring the sample current flowing in the sample to compensate for the photoelectrons emitted from the surface of the negative electrode active layer. In this case, since the emitted light is a linearly polarized X-ray due to the application of a magnetic field E, the intensity of the observed absorption peak may vary depending on the incident direction of the X-ray. Specifically, referring to (a) of FIG. 3, graphite, a carbon-based negative electrode active material, has a hexagonal network structure through sp2 bonds (-C=C-) of carbon atoms, wherein the sp2 bonds include a $\sigma$ orbital located in a direction parallel to the sp2 bonds and a $\pi$ orbital located in a direction perpendicular to the sp2 bonds. Here, the $\sigma$ orbitals and $\pi$ orbitals have a symmetrical structure with $\sigma^*$ orbitals and $\pi^*$ orbitals, which are antibonding orbitals and having nodes at the nuclear positions of the carbon atom, respectively, so that the $\sigma^*$ orbitals and $\pi^*$ orbitals have the same directionality as the $\sigma$ orbitals and $\pi$ orbitals.

Thus, as shown in (b) of FIG. 3, if the incident direction of the X-ray is parallel to the sp2 bond, the intensity of the absorption peak excited by the $\pi^*$ level from the 1s level of the carbon becomes larger, and conversely, if it is orthogonal to the sp2 bond, the intensity of the absorption peak becomes smaller. On the other hand, if the incident direction of the X-ray is parallel to the sp2 bond, the intensity of the absorption peak excited by the $\sigma^*$ level from the 1s level of the carbon becomes smaller, and if it is orthogonal to the sp2 bond, the intensity of the absorption peak becomes larger. Due to this characteristic, if the graphite contained in the negative electrode active layer is highly oriented, as shown in (b) of FIG. 2, the semi-coordinated molecular orbitals of the graphite located on the surface of the negative electrode active layer are uniformly aligned, so that when the incident angle of the X-ray on the negative electrode active layer is changed, the spectral shape of the emitted photoelectrons changes significantly due to enhancement, interference, etc. On the other hand, if the graphite contained in the negative electrode active layer has a low orientation, as shown in (a) of FIG. 2, the molecular orbitals of the semi-conjugated resonance of the graphite located on the surface of the negative electrode active layer are unevenly aligned, so the spectral shape changes little when the incident angle of the X-ray for the negative electrode active layer is changed.

Accordingly, in order to measure the degree of orientation of the carbon-based negative electrode active material contained in the negative electrode active layer, the present invention performs a NEXAFS spectroscopic analysis of the surface of the negative electrode active layer, wherein X-rays are incident on the negative electrode active layer at different incident angles (0° and 60°), and for each incident angle, the ratio of the absorption peak attributable to the transition from the 1s level to the $\pi^*$ level of carbon (peak A=287$\pm$0.2eV) intensity to the absorption peak (peak B=293$\pm$0.2eV) intensity attributable to the transition from the 1s level to the $\sigma^*$ level of carbon ($I_{B/A}$) is obtained, and then the ratio of the intensity ratios between the incident angles (60° and 0°) ($S_{60/0}= I60_{B/A}/I0_{B/A}$) is calculated, so that the orientation and/or alignment of the carbon-based negative electrode active material contained in the negative electrode active layer can be quantitatively measured.

In other words, the degree of orientation of the carbon-based negative electrode active material contained in the first region is determined by i) calculating the ratio ($I60_{B/A}$) of the absorption peak (peak A=287$\pm$0.2 eV) intensity ($I60_A$) attributable to the transition from the 1s level to the $\pi^*$ level of carbon measured at an X-ray incident angle of 60° to the absorption peak (peak B=293$\pm$0.2eV) intensity ($I60_B$) attributable to the transition from the 1s level to the $\sigma^*$ level of carbon ($I60_B$) measured at an X-ray incident angle of 60°, as shown in Equation 2; ii) calculating the ratio ($I0_{B/A}$) of the intensity ($I0_A$) of the absorption peak (peak A=287$\pm$0.2 eV) attributable to the transition from the 1s level to the $\pi^*$ level of carbon to the intensity ($I0_B$) of the absorption peak (peak B=293$\pm$0.2 eV) attributable to the transition from the 1s level to the $\sigma^*$ level of carbon measured at an X-ray incident angle of 0°, as shown in Equation 3; and iii) finding the ratio of these ($S_{60/0}= I60_{B/A}/I0_{B/A}$) as shown in Equation 1:

[Equation 2]

$$I60_{B/A} = \frac{I60_B}{I60_A}$$

[Equation 3]

$$I0_{B/A} = \frac{I0_B}{I0_A}$$

in Equation 2 and Equation 3,

$I60_A$ represents an intensity of a strongest peak present at 286$\pm$1.0 eV, at the incidence angle of 60°,
$I60_B$ represents an intensity of a strongest peak present the 292.5$\pm$1.0 eV at an incidence angle of 60°,
$I0_A$ represents an intensity of a strongest peak at 286$\pm$1.0 eV at the incidence angle of 0°,
$I0_B$ represents an intensity of a strongest peak present at 292.5$\pm$1.0 eV at an incidence angle of 0°.

Here, the value according to Equation 1 ($S_{60/0}$) may mean that the closer to 1, the lower the orientation of the a-b axis crystal faces of the graphite, a carbon-based negative electrode active material with respect to the negative electrode current collector and the higher the degree of alignment (O.I), and the closer to 0, the higher the orientation of the a-b axis crystal faces of the graphite with respect to the negative electrode current collector and the lower the degree of alignment (O.I). The first region according to the present invention may satisfy a mean value of the value ($S_{60/0}$) according to Equation 1 of 1.0 or less, more specifically, 0.9 or less; 0.8 or less; 0.7 or less; 0.5 or less; 0.01 to 1.0; 0.05 to 0.7; 0.05 to 0.5; 0.05 to 0.4; 0.1 to 0.7; 0.3 to 0.7; or 0.5 to 0.8. Further, the $n^{th}$ region may be satisfied by a mean value of the value ($S_{60/0}$) according to Equation 1 exceeding 0.8, more specifically, exceeding 0.9; or may satisfy 0.8 to 2.0; 0.9 to 1.5; 0.8 to 1.5; 0.8 to 1.3; or 0.85 to 1.2.

That the first region of the negative electrode active layer according to the present invention satisfies Equation 1 ($S_{60/0}$) by 1 or less indicates that the a-b axis crystal faces of the carbon-based negative electrode active material contained in the first region are aligned close to perpendicular to the negative electrode current collector as shown in (b) of FIG. 2. Therefore, the negative electrode including it can prevent an increase in electrical resistance in the region adjacent to the negative electrode tab during charging and discharging of the secondary battery, thereby preventing the N/P ratio from reversing.

This is not the same as saying that the carbon-based negative electrode active material particles satisfy Equation 1 ($S_{60/0}$) to a value less than or equal to 1. When a carbon-based negative electrode active material particle satisfies Equation 1 ($S_{60/0}$) as less than or equal to 1, it means that the a-b axis crystal faces of the molecular crystals comprising the carbon-based negative electrode active material particle are aligned with a predetermined orientation within the particle. Therefore, the inclusion of such carbon-based negative electrode active material in the negative electrode active layer is differentiated from the first region of the negative electrode active layer according to the present invention because, unless otherwise treated, the a-b axis crystal faces of the carbon-based negative electrode active material tend to be non-oriented with respect to the negative electrode current collector surface as shown in (a) of FIG. 2.

As another example, the first region of the negative electrode active layer is such that the a-b axis crystal faces of the carbon-based negative electrode active material are aligned close to perpendicular to the negative electrode current collector, such that, upon X-ray diffraction (XRD) spectroscopic analysis, the alignment ($O.I_{1st}$) of the carbon-based negative electrode active material represented by Equation 4 may be smaller than the alignment ($O.I_{nth}$) of the carbon-based negative electrode active material contained in the $n^{th}$ region (where $2 \leq n \leq 10$), and accordingly, the alignment ($O.I$) of the carbon-based negative electrode active material may increase as the position of the negative electrode active layer changes from the first side portion to the second side portion:

$$[\text{Equation 4}]$$

$$O.I = I_{004}/I_{110}$$

in Equation 4,

> $I_{004}$ represents the area of the peak representing the (0,0,4) crystal face in the X-ray diffraction spectroscopy (XRD) measurement of the negative active layer,
> $I_{110}$ represents the area of the peak representing the (1,1,0) crystal face in an X-ray diffraction (XRD) measurement of the negative active layer.

The crystal face orientation of the carbon-based negative electrode active material can be determined by crystal face analysis of the carbon-based negative electrode active material, such as X-ray diffraction spectroscopy. The orientation index (O.I) of the carbon-based negative electrode active material represented by Equation 4 can be an indicator of the direction in which the crystal structure of the carbon-based negative electrode active material is aligned during X-ray diffraction measurements, specifically, the degree to which the a-b axis crystal planes representing the two-dimensional planar structure of the carbon-based negative electrode active material are aligned with respect to the negative electrode current collector surface. For example, if the negative electrode active layer includes graphite as a carbon-based negative electrode active material, an X-ray diffraction spectroscopy analysis of the negative electrode active layer shows peaks for graphite at $2\theta=26.5\pm0.2°$, $42.4\pm0.2°$, $43.4\pm0.2°$, $44.6\pm0.2°$, $54.7\pm0.2°$, and $77.5\pm0.2°$. These represent the (0,0,2), (1,0,0), (1,0,1)R, (1,0,1)H, (0,0,4), and (1,1,0) crystal faces of the graphite contained in the negative electrode active layer. In general, in the case of graphite, graphene layers are placed on the a- and b-axis planes, and these graphene layers are stacked along the c-axis to form a hexagonal or rhombohedral crystal structure. The peak at $2\theta=43.4\pm0.2°$ can also be seen as an overlap of the peaks corresponding to the (1,0,1)R plane of carbon-based materials and the (1,1,1) plane of current collectors, such as Cu.

The present invention is capable of measuring the degree of alignment (O.I) of graphite through the ratio of the areas of the peak at $2\theta=77.5\pm0.2°$ representing the (1,1,0) plane and the peak at $2\theta=54.7\pm0.2°$ representing the (0,0,4) plane, specifically, the ratio of the areas obtained by integrating the intensities of the peaks. In addition, X-ray diffraction was measured using a CuK $\alpha$-ray as the target line, and to improve the peak intensity resolution, the target line was extracted with a monochromator device. In this case, the measurement conditions were $2\theta=10°$ to $90°$, scan speed (°/s) was 0.044 to 0.089, and step size was 0.026°/step. In addition, the (0,0,4) plane at $2\theta=54.7\pm0.2°$ represents the thickness direction characteristics (c-axis direction characteristics) of the laminated structure with the two-dimensional planar structure of the graphite layer, and the (1,1,0) plane at $2\theta=77.5\pm0.2°$ represents the planar characteristics (a-b-axis direction characteristics) of the laminated graphite layer. Therefore, the smaller the peak in the (0,0,4) plane, which represents the thickness-direction characteristics of the graphite layer plane, and the larger the peak in the (1,1,0) plane, which represents the planar characteristics of the graphite layer, the more the graphite plane is aligned at a high angle to the negative electrode current collector surface. In other words, the degree of alignment (O.I) may mean that the angle or slope of the graphite layer surface with respect to the negative electrode current collector surface is close to 90° when the value is close to 0, and the slope with respect to the negative electrode collector surface is close to 0° or 180° when the value is larger.

In this respect, the first region of the negative electrode active layer according to the present invention may have a lower alignment (O.I) of the carbon-based negative electrode active material compared to the $n^{th}$ region of the negative electrode active layer (where $2 \leq n \leq 10$) because the a-b axis crystal faces of the carbon-based negative electrode active material are aligned close to perpendicular to the negative electrode current collector.

Specifically, the alignment (O.I) of the carbon-based negative electrode active material contained in the first region can be from 0.1 to 0.6, and more specifically, from 0.15 to 0.6; 0.15 to 0.5; 0.2 to 0.5; 0.2 to 0.4; 0.25 to 0.45; 0.3 to 0.5; or 0.35 to 0.6.

Furthermore, the alignment of the carbon-based negative electrode active material contained in the $n^{th}$ region $(O.I_{nth})$ may be 101% to 300% of the alignment of the carbon-based negative electrode active material contained in the first region $(O.I_{1st})$, more specifically 101% to 280%; 101% to 260%; 101% to 240%; 101% to 230%; 101% to 220%; 101% to 200%; 150% to 250%; 160% to 230%; 180% to 270%; 185% to 225%; 170% to 250%; 105% to 130%; 110% to 150%; 110% to 130%; 120% to 180%; 120% to 160%; 101% to 180%; 150% to 200%; 125% to 150%; 140% to 180%; 160% to 190%; 110% to 160%; or 120% to 150%.

Further, the average alignment (O.I) of the carbon-based negative electrode active material contained in the entire negative electrode active layer may be from 0.4 to 1.2, more specifically from 0.4 to 1.0; 0.4 to 0.9; 0.4 to 0.7; 0.4 to 0.6; 0.6 to 1.0; 0.8 to 1.0; or 0.5 to 0.8.

By controlling the alignment $(O.I_{1st}$ and $O.I_{nth})$ of the carbon-based negative electrode active materials contained in the first region, the $n^{th}$ region, and the entire negative electrode active layer as described above, the present invention can improve the mobility of lithium ions in the negative electrode active layer adjacent to the negative electrode tab during charging and discharging of the battery while reducing the electrical resistance of the electrode, thereby preventing the reduction of the charge and discharge capacity in the first region adjacent to the negative electrode tab. This can prevent a reversal of the N/P ratio in the first side portion adjacent to the negative electrode tab, thereby preventing precipitation of lithium.

Furthermore, the average alignment (O.I) of the negative electrode active layer may be 0.1 to 0.5, and more particularly, may be 0.2 to 0.4. By controlling the average value of the overall orientation of the negative electrode active layer to the above range, the present invention can keep the alignment of the carbon-based negative electrode active material contained throughout the negative electrode active layer constant, so that the electrical properties of the negative electrode can be realized uniformly.

Furthermore, the first region of the negative electrode active layer may control an intensity ratio $(I_{004}/I_{002})$ of a peak representing the (0,0,4) crystal face and a peak representing the (0,0,2) crystal face in an X-ray diffraction (XRD) spectroscopic analysis in a certain range in order to prevent lithium from precipitating into a dendrite on the surface of the negative electrode active layer when the battery is charged and discharged under high rate conditions. Specifically, the first region can control the intensity ratio $(I_{004}/I_{002})$ to be greater than or equal to 0.04, and more specifically, it can be 0.04 to 0.09; 0.04 to 0.07; or 0.071 to 0.095. By controlling the intensity ratio $(I_{004}/I_{002})$ of the peak representing the (0,0,4) crystal face and the peak representing the (0,0,2) crystal face among the peaks detected in X-ray diffraction (XRD) spectroscopic analysis to the above range, the present invention has the advantage of suppressing the increase of the direct current internal resistance in the first region, improving the high rate characteristics, and improving the cycle life characteristics.

Meanwhile, the negative electrode active layer according to the present invention may optionally further include, in addition to the negative electrode active material, a conductor, a binder, other additives, etc. as required.

The conductor may include one or more types of carbon black, acetylene black, ketjen black, carbon nanotubes, carbon fiber, and the like, but is not limited thereto.

As one example, the negative electrode active layer may contain carbon black, carbon nanotubes or carbon fibers as a conductor alone or in combination.

Here, the content of the conductor may be from 0.1 to 10 parts by weight, more specifically, 0.1 to 8 parts by weight, 0.1 to 5 parts by weight, 0.1 to 3 parts by weight, or 0.5 to 2 parts by weight, relative to the total 100 parts by weight of the negative electrode active layer. By controlling the content of the conductor to the above range, the present invention can prevent the resistance of the negative electrode from increasing due to a low content of the conductor, thereby reducing the charging capacity, and the content of the negative electrode active material from decreasing due to an excessive amount of the conductor, thereby reducing the charging capacity, or the rapid charging characteristics from decreasing due to an increase in the loading amount of the negative electrode active layer.

In addition, the binder can be appropriately applied as a component that assists in the bonding of the active material and the conductor and the bonding to the current collector to the extent that it does not degrade the electrical properties of the electrode, but may specifically include one or more among vinylidene fluoride-hexafluoropropylene copolymer (PVDF-co-HFP), polyvinylidenefluoride (PVdF), and polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber, and fluorinated rubber.

The content of the binder may be from 0.1 to 10 parts by weight, more particularly from 0.1 to 8 parts by weight, from 0.1 to 5 parts by weight, from 0.1 to 3 parts by weight, or from 2 to 6 parts by weight, based on a total of 100 parts by weight of the negative electrode active layer. By controlling the content of the binder contained in the negative electrode active layer to the above range, the present invention can prevent the adhesive strength of the active layer from being reduced due to a low content of binder or the electrical properties of the electrode from being reduced due to an excess of binder.

In addition, the negative electrode current collector is not particularly limited as long as it has a high conductivity without causing chemical changes in the battery, and for example, copper, stainless steel, nickel, titanium, calcined carbon, and the like can be used, and in the case of copper or stainless steel, those that are surface treated with carbon, nickel, titanium, silver, and the like can also be used. In addition, the average thickness of the negative electrode current collector may be appropriately applied from 1 to 500 $\mu$m in consideration of the conductivity and total thickness of the negative electrode to be prepared.

By the above-described configuration, a negative electrode for a lithium secondary battery according to the present invention has the advantage of having a good effect of suppressing lithium precipitation from the surface of the negative electrode active layer during charging and discharging of the secondary battery, especially during charging and discharging under high rate conditions, so that the lithium secondary battery including it exhibits high safety.

Lithium secondary battery

Furthermore, in an exemplary embodiment, the present invention provides a lithium secondary battery including:

> an electrode assembly including a positive electrode,
> the negative electrode of the present invention as described above, and
> a separator disposed between the positive electrode and the negative electrode.

The lithium secondary battery according to the present invention includes an electrode assembly, each having a plurality of positive electrodes and a plurality of negative electrodes arranged alternately and a separator positioned therebetween; and an electrolyte composition in which a lithium salt and electrolyte additives are dissolved in a non-aqueous organic solvent. Here, the lithium secondary battery includes a negative electrode of the present invention wherein the a-b axis crystal faces of a carbon-based negative electrode active material contained in a region adjacent to the negative electrode tabs in the negative electrode active layer are aligned perpendicularly and/or nearly perpendicularly with respect to the surface of the negative electrode current collector. Accordingly, the lithium secondary battery has the advantage of high safety since precipitation of lithium from the surface of the negative electrode active layer, particularly from the surface of the region adjacent to the negative electrode tab, is prevented during charge and discharge of the battery, particularly during charge and discharge under high rate conditions.

In this case, the negative electrode has the same configuration as the configuration described above, so the specific description is omitted.

The positive electrode is provided with a positive electrode active layer prepared by applying, drying, and pressing a slurry including a positive electrode active material onto the positive electrode current collector, and the positive electrode active layer may optionally further include a conductor, a binder, other additives, and the like, as desired.

The positive electrode active material is a material capable of electrochemically reacting on the positive electrode current collector and may include one or more of the lithium metal oxides represented by Chemical Formula 1 and Chemical Formula 2 below that are capable of reversibly intercalating and deintercalating lithium ions:

[Chemical Formula 1] $\qquad$ $Li_x[Ni_yCo_zMn_wM^1{}_v]O_2$

[Chemical Formula 2] $\qquad$ $LiM^2{}_pMn_qP_rO_4$

in Chemical Formula 1 and Chemical Formula 2,

> $M^1$ is one or more of the following elements of W, Cu, Fe, V, Cr, Ti, Zr, Zn, Al, In, Ta, Y, La, Sr, Ga, Sc, Gd, Sm, Ca, Ce, Nb, Mg, B, and Mo,

x, y, z, w, and v are 1.0≤x≤1.30, 0.5≤y<1, 0<z≤0.3, 0<w≤0.3, and 0≤v≤0.1, respectively, and y+z+w+v=1,
$M^2$ is Ni, Co, or Fe,
p is 0.05≤p≤1.0,
q is either 1-p or 2-p, and
r is 0 or 1.

Lithium metal oxides represented by Chemical Formula 1 and Chemical Formula 2, respectively, are materials containing a high content of nickel (Ni) and manganese (Mn), and have the advantage of being able to stably supply high capacity and/or high voltage electricity when used as a positive electrode active material.

In this case, the lithium metal oxide represented by the above Chemical Formula 1 may include $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$ and the like, which may be used alone or in combination. Further, the lithium metal oxide represented by Chemical Formula 2 above may include $LiNi_{0.7}Mn_{1.3}O_4$; $LiNi_{0.5}Mn_{1.5}O_4$; $LiNi_{0.3}Mn_{1.7}O_4$, $LiFePO_4$, $LiFe_{0.8}Mn_{0.2}PO_4$, $LiFe_{0.5}Mn_{0.5}PO_4$, and the like, which may be used alone or in combination.

Furthermore, the positive electrode active material may be included in the amount of at least 85 parts by weight based on the weight of the positive electrode active layer, and more specifically may be included in the amount of at least 90 parts by weight, at least 93 parts by weight, or at least 95 parts by weight.

Moreover, the positive electrode active layer may further include a conductor, a binder, other additives, and the like along with the positive electrode active material.

In this case, the conductor is used to improve the electrical performance of the positive electrode and may be any material conventionally used in the art, but more particularly may include one or more selected from the group consisting of natural graphite, synthetic graphite, carbon black, acetylene black, denka black, ketjen black, super-P, channel black, furnace black, lamp black, summer black, graphene, and carbon nanotubes.

Furthermore, the conductor may be included in the amount of 0.1 to 5 parts by weight based on the weight of each positive electrode active layer, more particularly may be included in the amount of 0.1 to 4 parts by weight; 2 to 4 parts by weight; 1.5 to 5 parts by weight; 1 to 3 parts by weight; 0.1 to 2 parts by weight; or 0.1 to 1 part by weight.

In addition, the binder serves to cause the positive electrode active material, positive electrode additive, and conductor to be bonded together, and may be used without being particularly limited as long as it has this function. Specifically, the binder may include one or more resins selected from the group consisting of polyvinylidene fluoride-hexafluoropropylene copolymer (PVdF-co-HFP), polyvinylidenefluoride (PVdF), polyacrylonitrile, polymethylmethacrylate, and copolymers thereof. In one example, the binder may include polyvinylidenefluoride.

Additionally, the binder may be included in the amount of 1 to 10 parts by weight based on the weight of each positive electrode active layer, more particularly 2 to 8 parts by weight; or 1 to 5 parts by weight.

The total thickness of the positive electrode active layer is not particularly limited, but may be from 50 μm to 300 μm, and more particularly from 100 μm to 200 μm; 80 μm to 150 μm; 120 μm to 170 μm; 150 μm to 300 μm; 200 μm to 300 μm; or 150 μm to 190 μm.

Furthermore, as a positive electrode current collector, the positive electrode can use those having a high conductivity without causing chemical changes in the battery. For example, stainless steel, aluminum, nickel, titanium, calcined carbon, and the like can be used, and in the case of aluminum or stainless steel, those that are surface treated of carbon, nickel, titanium, silver, and the like can be used. Furthermore, the average thickness of the current collector may be suitably applied from 3 to 500 μm, considering the conductivity and total thickness of the positive electrode being manufactured.

Meanwhile, the separator interposed between the positive electrode and the negative electrode of each unit cell is an insulating thin film having high ionic permeability and mechanical strength, which is conventionally used in the art, but is not particularly limited, and in particular, those including one or more of the following polymers may be used: chemically resistant and hydrophobic polypropylene; polyethylene; polyethylene-propylene copolymer. The separator may take the form of a porous polymeric substrate, such as a sheet or nonwoven fabric including the above-described polymers, and in some cases may take the form of a composite separator in which organic or inorganic particles are coated by an organic binder on the porous polymeric substrate. Furthermore, the separator may have an average pore diameter from 0.01 to 10 μm, and an average thickness from 5 to 300 μm.

The lithium secondary battery according to the present invention is not particularly limited, but may also be a secondary battery in a form that may include a stack-type; zigzag; or zigzag-stacked electrode assembly. As one example, the lithium secondary battery according to the present invention may be a pouch-type secondary battery or a prismatic secondary battery.

By implementing a low alignment ($S_{60/0}$ or O.I) of the carbon-based active material contained in the first region of the negative electrode active layer adjacent to the negative electrode tab, the negative electrode applied to the lithium secondary battery according to the present invention can improve the mobility of lithium ions in the first region adjacent to the negative electrode tab during charge and discharge of the battery while reducing the electrical resistance, thereby preventing the charge and discharge capacity per unit area of the region from decreasing. This can prevent the N/P ratio reversal that occurs in the negative electrode active layer adjacent to the negative electrode tab during high-rate charge and discharge, thereby preventing precipitation of lithium. Thus, the lithium secondary battery has the advantage of high safety and can be charged and discharged for a long time under high rate conditions.

Hereinafter, the present invention will be described in more detail by way of examples and experimental examples.

However, the following examples and experimental examples are only illustrative of the present invention, and the contents of the present invention are not limited to the following examples and experimental examples.

**Examples 1 to 4. Preparation of a negative electrode for a lithium secondary battery**

Natural graphite was prepared as a negative electrode active material, carbon black as a conductor, and carboxymethylcellulose (CMC) and styrene butadiene rubber (SBR) as binders. Here, the sphericity of natural graphite was controlled as shown in Table 1 below. The negative electrode slurry was formed by mixing 95 parts by weight of natural graphite, 1 part by weight of carbon black, 1.5 parts by weight of carboxymethyl cellulose (CMC), and 2.5 parts by weight of styrene butadiene rubber (SBR) with water to reach 50% solids content, which was cast on a copper thin plate (thickness: 10 $\mu$m) that was being transferred roll-to-roll.

Then, four magnets having the same size were successively arranged so as to be perpendicular to the direction of movement of the applied negative electrode slurry (i.e., the width direction of the negative electrode slurry). At this time, as the position of the magnets changed from the first side portion of the negative electrode slurry, which was to be the negative electrode active layer provided with the negative electrode tab, to the second side portion of the negative electrode slurry, which was to be the other side, the magnetic field intensity applied decreased from 2.0 T to 1.0 T in a ⓐ stepwise manner with a predetermined interval or in a ⓑ decreasing gradient, as shown in Table 1, to induce the orientation of the natural graphite in the negative electrode slurry. In addition, the time for the magnetic field to be applied to the upper surface of the negative electrode slurry was controlled to be 5 seconds. The copper thin plate applied with the negative electrode slurry was then dried in a vacuum oven at 130°C and rolled to a density of 1.63±0.2 g/cc, and the negative electrode was prepared by successively slitting and notching to provide a negative electrode tab on the side with the first side portion.

To confirm the alignment of the carbon-based negative electrode active material by the negative electrode active layer region of each manufactured negative electrode, the negative electrode active layer was divided into regions 1 through 4 (n=4) from the first side portion where the negative electrode tab is located to the second side portion opposite it, with each region having the same length ratio to the total length of the negative electrode active layer. Here, the length of the first through fourth regions was the same as the size of the magnet used to apply the magnetic field. Then, spectra were measured by: i) performing near edge X-ray absorption fine structure (NEXAFS) spectroscopy and X-ray diffraction (XRD) spectroscopy, respectively, for each negative electrode active layer region of each prepared negative electrode. The alignment (S60/0 and O.I) of natural graphite (i.e., carbon-based negative electrode active material) were calculated from the spectra obtained using Equations 1 to 4 below and are shown in Table 2 below. Also, ii) the ratio ($I_{004}/I_{002}$) of the intensity of the peak representing the (0,0,4) plane to the intensity of the peak representing the (0,0,2) plane was calculated from the spectrum obtained when X-ray diffraction (XRD) spectroscopic analysis of the first region of the negative electrode active layer was performed, which is shown in Table 2 below:

[Equation 1]

$$S_{60/0} = \frac{I60_{B/A}}{I0_{B/A}}$$

[Equation 2]

$$I60_{B/A} = \frac{I60_B}{I60_A}$$

[Equation 3]

$$I0_{B/A} = \frac{I0_B}{I0_A}$$

in Equation 1 to Equation 3,

$S_{60/0}$ represents a value of a ratio of a ratio of a peak intensity ($I60_{B/A}$) at an incident angle of 60° of an X-ray to a ratio of a peak intensity ($I0_{B/A}$) at an incident angle of 0° of the X-ray,
$I60_A$ represents an intensity of a strongest peak present at 286±1.0 eV, at an incidence angle of 60°,
$I60_B$ represents an intensity of a strongest peak present at 292.5±1.0 eV at an incidence angle of 60°,
$I0_A$ represents an intensity of a strongest peak at 286±1.0 eV at an incidence angle of 0°,
$I0_B$ represents an intensity of a strongest peak present at 292.5±1.0 eV at an incidence angle of 0°.

[Equation 4]

$$O.I = I_{004}/I_{110}$$

in Equation 4,

$I_{004}$ represents the area of the peak representing the (0,0,4) crystal face in the X-ray diffraction spectroscopy (XRD) measurement of the negative active layer,
$I_{110}$ represents the area of the peak representing the (1,1,0) crystal face in an X-ray diffraction (XRD) measurement of the negative active layer.

Table 1]

| | Natural graphite Sphericity | Magnetic field reduction method | Magnetic field strength | | | |
|---|---|---|---|---|---|---|
| | | | First region | Second region | Third region | Fourth region |
| Example 1 | 0.91 | ⓐ Stepwise | 2.0T | 1.66T | 1.33T | 1.0T |
| Example 2 | 0.91 | ⓐ Stepwise | 2.0T | 1.55T | 1.45T | 1.0T |
| Example 3 | 0.91 | ⓑ Decreasing gradient | 2.0T → 1.0T | | | |
| Example 4 | 0.65 | ⓐ Stepwise | 2.0T | 1.66T | 1.33T | 1.0T |

[Table 2]

|  |  |  | Example 1 | Example 2 | Example 3 | Example 4 |
|---|---|---|---|---|---|---|
| Alignm ent | First region | $S_{60/0}$ | 0.61 | 0.73 | 0.58 | 0.76 |
|  |  | O.I | 0.23 | 0.32 | 0.21 | 0.34 |
|  | Second region | $S_{60/0}$ | 0.71 | 0.87 | 0.67 | 0.89 |
|  |  | O.I | 0.32 | 0.44 | 0.29 | 0.44 |
|  | Third region | $S_{60/0}$ | 0.83 | 0.95 | 0.78 | 1.02 |
|  |  | O.I | 0.42 | 0.50 | 0.37 | 0.55 |
|  | Fourth region | $S_{60/0}$ | 0.92 | 1.10 | 0.87 | 1.14 |
|  |  | O.I | 0.51 | 0.62 | 0.44 | 0.65 |
| First region |  | $I_{004}/I_{002}$ | 0.05 | 0.04 | 0.05 | 0.03 |

In addition, the measurement conditions for near edge X-ray absorption fine structure (NEXAFS) and X-ray diffraction (XRD) are as follows:

① Near edge X-ray absorption fine structure (NEXAFS):

- Acceleration voltage: 1.0 GeV to 1.5 GeV
- Accumulation current: 80 to 350 mA
- Incidence angle: 60° or 0

② X-ray diffraction (XRD):

- Target: Cu (Kα-ray) graphite monochromator
- Slit: Divergence slit = 1 degree, receiving slit = 0.1 mm, scattering slit = 1 degree

**Comparative Examples 1 to 3. Preparation of a negative electrode for a lithium secondary battery**

The negative electrode for the lithium secondary battery was prepared by performing the same method as in Example 1, except that no magnetic field or a magnetic field of 1.0 T or 2.0 T without changing the intensity of the magnetic field was applied to the surface of the negative electrode slurry applied on the copper thin plate.

Here, i) the sphericity of the carbon-based negative electrode active material, ii) the alignment of the natural graphite (i.e., carbon-based negative electrode active material) in the first and fourth regions of the negative electrode active layer ($S_{60/0}$ and O.I), and iii) the ratio ($I_{004}/I_{002}$) of the intensity of the peak representing the (0,0,4) plane to the intensity of the peak representing the (0,0,2) plane calculated from X-ray diffraction (XRD) are shown in Table 3 below.

[Table 3]

|  | Magnetic field application intensity | Natural graphite sphericity | First region | | | Fourth region | |
|---|---|---|---|---|---|---|---|
|  |  |  | Alignment | | $I_{004}/I_{002}$ | Alignment | |
|  |  |  | $S_{60/0}$ | O.I |  | $S_{60/0}$ | O.I |
| Comparative Example 1 | 0T | 0.91 | 3.04 | 12.8 | 0.07 | 3.04 | 12.7 |
| Comparative Example 2 | 1.0T | 0.91 | 1.32 | 1.13 | 0.05 | 1.31 | 1.13 |
| Comparative Example 3 | 2.0T | 0.91 | 1.06 | 0.73 | 0.05 | 1.06 | 0.75 |

**Examples 5 to 8 and Comparative Examples 4 to 6. Preparation of lithium secondary batteries**

$LiNi_{0.7}Co_{0.1}Mn_{0.1}Al_{0.1}O_2$ with a particle size of 5 μm was prepared as the positive electrode active material, and mixed with a carbon-based conductor and polyvinylidene fluoride as binder in a weight ratio of 94:3:3 in N-methyl pyrrolidone (NMP) to form a slurry, cast on an aluminum thin plate, dried in a 120°C vacuum oven, and rolled to prepare the positive electrode.

The lithium secondary battery was assembled by interposing an 18 μm polypropylene separator between the positive electrode obtained above and the negative electrode prepared in the Examples and Comparative Examples, respectively, inserting it into the case, and then injecting the electrolyte composition.

Here, the type of negative electrode applied to each lithium secondary battery is shown in Table 4 below.

[Table 4]

|  | Type of negative electrode applied |
|---|---|
| Example 5 | Negative electrode prepared in Example 1 |
| Example 6 | Negative electrode prepared in Example 2 |
| Example 7 | Negative electrode prepared in Example 3 |
| Example 8 | Negative electrode prepared in Example 4 |
| Comparative Example 4 | Negative electrode prepared in Comparative Example 1 |
| Comparative Example 5 | Negative electrode prepared in Comparative Example 2 |
| Comparative Example 6 | Negative electrode prepared in Comparative Example 3 |

**Experimental Example 1.**

To evaluate the safety of the lithium secondary battery according to the present invention during high-rate charge and discharge, the following experiments were performed on each of the lithium secondary batteries manufactured in the Examples and Comparative Examples.

a) Evaluating the high rate characteristics of a secondary battery

First, an initial charge was performed on each of the manufactured lithium secondary batteries. Specifically, the initial charge was performed at a temperature of 25°C with a charging current of 0.3C to a charge termination voltage of 4.2-4.25V, and the lithium secondary battery was activated until the current density was 0.02C at the termination voltage.

Each activated lithium secondary battery was fully charged at room temperature 22°C at a rate of 0.1C. The fully charged lithium secondary batteries were then discharged at a rate of 0.1C to measure the initial discharge capacity. Then, each lithium secondary battery was fully charged again at a rate of 0.1C, discharged at a rate of 1.0C, 2.0C, 5.0C, and 9.0C, and the relative discharge capacity ratio based on the initial discharge capacity by discharge rate was measured, and the measured discharge capacity ratios are shown in Table 5.

b) Evaluating the safety of the secondary battery

First, an initial charge was performed on each of the manufactured lithium secondary batteries. Specifically, the lithium secondary battery was initially charged at a temperature of 25°C with a charging current of 0.3C to a charge termination voltage of 4.2~4.25V, and activated by performing the charge until the current density at the termination voltage was 0.02C.

Then, for each activated lithium secondary battery, the battery was charged to a charge termination voltage of 4.2-4.25V at a temperature of 25°C with a charging current of 3.0C, and discharged in constant current mode until the current density was 0.02C at the termination voltage. Such charging and discharging were set as one cycle, a total of 100 cycles was performed, and each lithium secondary battery subjected to 100 cycles of charge and discharge was disassembled to check for lithium precipitation on the negative electrode surface. The results are shown in Table 5.

[Table 5]

| | Relative discharge capacity ratio [%] | | | | Whether lithium metal precipitated |
|---|---|---|---|---|---|
| | 1C | 2C | 5C | 9C | |
| Example 5 | 99.8 | 99.0 | 93.2 | 84.7 | X |
| Example 6 | 99.1 | 98.4 | 91.1 | 82.3 | X |
| Example 7 | 99.8 | 99.1 | 94.6 | 89.2 | X |
| Example 8 | 99.0 | 96.7 | 87.3 | 79.4 | X |
| Comparative Example 4 | 96.5 | 91.6 | 78.4 | 69.8 | ○ |
| Comparative Example 5 | 98.0 | 95.1 | 86.1 | 71.1 | ○ |
| Comparative Example 6 | 98.7 | 96.2 | 86.9 | 77.5 | ○ |

As shown in Table 5 above, the secondary battery including a negative electrode for a lithium secondary battery according to the present invention not only has excellent high-rate charge and discharge efficiency, but also shows that lithium metal precipitation on the negative electrode surface is suppressed even when repeatedly performing high-rate charging.

This means that the degree of near-vertical alignment of the carbon-based negative electrode active material with respect to the surface of the negative electrode current collector is greatly induced in the first region of the negative electrode active layer adjacent to the negative electrode tab, thereby lowering the electrode resistance in the first region and improving the capacity degradation per unit area in the first side.

From these results, it can be seen that the negative electrode for a lithium secondary battery according to the present invention has a good effect of suppressing lithium precipitation from the surface of the negative electrode active layer during high-rate charge and discharge of the secondary battery, so that a lithium secondary battery including it has high safety and can be charged and discharged for a long time under high-rate conditions.

Although the above has been described with reference to a preferred exemplary embodiment of the present invention, it will be understood by those skilled in the art or having ordinary knowledge of the art that various modifications and changes can be made to the present invention without departing from the ideas and technical scope of the present invention described in the following claims.

Accordingly, the technical scope of the present invention is not limited to what is described in the detailed description of the specification, but should be defined by the patent claims.

**Claims**

1.   A negative electrode for a lithium secondary battery comprising:

a negative electrode current collector,
a negative electrode active layer disposed on at least one side of the negative electrode current collector and including a carbon-based negative electrode active material, and
a negative electrode tab drawn out to one side of the negative electrode active layer and provided on a non-coating portion that does not include the negative electrode active layer on the negative electrode current collector;
wherein the negative electrode active layer is divided into a first region to an $n^{th}$ region where $2 \leq n \leq 10$, each region having a same length ratio with respect to a total length of the negative electrode active layer based on a thickness direction cross-sectional structure in which the negative electrode tabs is provided on one side, and sequentially arranged from a first side portion from which the negative electrode tab is withdrawn to a second side portion opposite thereto;
wherein an alignment of the carbon-based negative electrode active material represented by Equation 1 increases from the first region to the $n^{th}$ region:

[Equation 1]

$$S_{60/0} = \frac{I60_{B/A}}{I0_{B/A}}$$

[Equation 2]

$$I60_{B/A} = \frac{I60_B}{I60_A}$$

[Equation 3]

$$I0_{B/A} = \frac{I0_B}{I0_A}$$

in Equation 1 to Equation 3,

$S_{60/0}$ represents the value of a ratio of the ratio of the peak intensity ($I60_{B/A}$) at an incident angle of 60° of the X-ray to the ratio of the peak intensity ($I0_{B/A}$) at an incident angle of 0° of the X-ray,
$I60_A$ represents the intensity of the longest peak present at 286±1.0 eV, at an incidence angle of 60°,
$I60_B$ represents the intensity of the longest intensity of the peak present at 292.5±1.0 eV at an incidence angle of 60°,
$I0_A$ represents the intensity of the longest peak at 286±1.0 eV at an incidence angle of 0°,
$I0_B$ represents the intensity of the peak having the longest intensity among the peaks present at 292.5±1.0 eV at an incidence angle of 0°.

2. The negative electrode for lithium secondary battery of claim 1, wherein the carbon-based negative electrode active material in the first region of the negative electrode active layer has an alignment ($S_{60/0}$), represented by Equation 1, ranging from 0.01 to 1.0.

3. The negative electrode for lithium secondary battery of claim 1, wherein in the negative electrode active layer, an alignment of the carbon-based negative electrode active material according to Equation 4 increases as it progresses from the first region to the $n^{th}$ region:

[Equation 4]

$$O.I = I_{004}/I_{110}$$

in Equation 4,

$I_{004}$ represents an area of a peak representing a (0,0,4) crystal face in an X-ray diffraction spectroscopy (XRD) measurement of the negative electrode active layer,
$I_{110}$ represents an area of a peak representing a (1,1,0) crystal face in the X-ray diffraction (XRD) measurement of the negative electrode active layer.

4.  The negative electrode for lithium secondary battery of claim 3, wherein, according to Equation 4, the carbon-based negative electrode active material contained in the $n^{th}$ region has an alignment that is 110% to 300% of the alignment of the carbon-based negative electrode active material contained in the first region.

5.  The negative electrode for lithium secondary battery of claim 3, wherein, according to Equation 4, the carbon-based negative electrode active material in the first region of the negative electrode active layer has an average alignment ranging from 0.1 to 0.6.

6.  The negative electrode for lithium secondary battery of claim 1 or 3, wherein, according to Equation 1 or 4, the carbon-based negative electrode active material contained in the negative electrode active layer has a gradient of increasing alignment from the first region to the $n^{th}$ region.

7.  The negative electrode for lithium secondary battery of claim 1 or 3, wherein, according to Equation 1 or 4, the carbon-based negative electrode active material contained in the negative electrode active layer has a stepwise increase in alignment from the first region to the $n^{th}$ region.

8.  The negative electrode for lithium secondary battery of claim 1, wherein the first region of the negative electrode active layer has a ratio ($I_{004}/I_{002}$) of an intensity of a peak representing a (0,0,4) crystal face to an intensity of a peak representing a (0,0,2 ) crystal face of greater than or equal to 0.04 when measured by X-ray diffraction spectroscopy (XRD).

9.  The negative electrode for lithium secondary battery of claim 1, wherein the carbon-based negative electrode active material includes one or more of natural graphite or synthetic graphite.

10. The negative electrode for lithium secondary battery of claim 1, wherein the carbon-based negative electrode active material has a sphericity of 0.75 or greater.

11. A lithium secondary battery comprising:
    an electrode assembly including a positive electrode, the negative electrode according to claim 1, and a separator disposed between the positive electrode and negative electrode.

12. The lithium secondary battery of claim 11, wherein the positive electrode includes a positive electrode active layer provided on at least one side of the positive electrode current collector and including at least one positive electrode active material selected from lithium metal oxide represented by Chemical Formula 1 and Chemical Formula 2:

    [Chemical Formula 1]   $Li_x[Ni_yCo_zMn_wM^1_v]O_2$

    [Chemical Formula 2]   $LiM^2_pMn_{1-p}O_4$

    in Chemical Formula 1 and Chemical Formula 2,

    $M^1$ is one or more of the following elements of W, Cu, Fe, V, Cr, Ti, Zr, Zn, Al, In, Ta, Y, La, Sr, Ga, Sc, Gd, Sm, Ca, Ce, Nb, Mg, B, and Mo,
    x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, and y+z+w+v=1,
    $M^2$ is Ni, Co, or Fe, and
    p is $0.05 \leq p \leq 1.0$.

13. The lithium secondary battery of claim 12, wherein the positive electrode active material includes one or more selected from the group consisting of $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, $LiNi_{0.3}Mn_{1.7}O_4$, $LiFePO_4$, $LiFe_{0.8}Mn_{0.2}PO_4$, and $LiFe_{0.5}Mn_{0.5}PO_4$.

14. The lithium secondary battery of claim 11, wherein the electrode assembly is a stack-type electrode assembly; a zigzag electrode assembly; or a zigzag-stacked electrode assembly.

[FIG. 1]

[FIG. 2]

(a)

(b)

[FIG. 3]

(a)

π bond

σ bond

(b)

X-ray

E

σ*

σ*

σ*

π bond

π*

π*

π*

[FIG. 4]

## INTERNATIONAL SEARCH REPORT

| International application No. |
| --- |
| **PCT/KR2023/013870** |

### A. CLASSIFICATION OF SUBJECT MATTER

**H01M 4/583**(2010.01)i; **H01M 10/0525**(2010.01)i; **H01M 4/525**(2010.01)i; **G01N 23/207**(2006.01)i;
**G01N 23/223**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/583(2010.01); H01M 10/052(2010.01); H01M 10/0587(2010.01); H01M 10/42(2006.01); H01M 4/133(2010.01);
H01M 4/1393(2010.01); H01M 4/505(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극 집전체(anode current collector),
음극 활성층(anode active layer), 탄소계 음극 활물질(carbon-based anode active material)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2022-0057713 A (LG ENERGY SOLUTION, LTD.) 09 May 2022 (2022-05-09)<br>See paragraphs [0005]-[0007], [0031], [0035]-[0037] and [0046], and figures 1 and 6-8. | 1-14 |
| Y | JP 2013-069431 A (TOYOTA MOTOR CORP.) 18 April 2013 (2013-04-18)<br>See paragraphs [0005], [0007], [0019], [0034] and [0038]. | 1-14 |
| Y | KR 10-2018-0065385 A (SAMSUNG SDI CO., LTD.) 18 June 2018 (2018-06-18)<br>See paragraph [0041]. | 8 |
| Y | KR 10-1607794 B1 (CHUO DENKI KOGYO CO., LTD. et al.) 30 March 2016 (2016-03-30)<br>See paragraph [0009]. | 10 |
| Y | KR 10-2022-0092450 A (LG ENERGY SOLUTION, LTD.) 01 July 2022 (2022-07-01)<br>See paragraphs [0131] and [0162]. | 12-13 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **22 December 2023** | **26 December 2023** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2023/013870** |

| Patent document cited in search report | | | Publication date (day/month/year) | Patent family member(s) | | | Publication date (day/month/year) |
| --- | --- | --- | --- | --- | --- | --- | --- |
| KR | 10-2022-0057713 | A | 09 May 2022 | CN | 115280543 | A | 01 November 2022 |
| | | | | EP | 4099424 | A1 | 07 December 2022 |
| | | | | US | 2023-0131033 | A1 | 27 April 2023 |
| | | | | WO | 2022-092816 | A1 | 05 May 2022 |
| JP | 2013-069431 | A | 18 April 2013 | | None | | |
| KR | 10-2018-0065385 | A | 18 June 2018 | CN | 108172751 | A | 15 June 2018 |
| | | | | CN | 108172751 | B | 09 February 2021 |
| | | | | KR | 10-2483995 | B1 | 30 December 2022 |
| | | | | US | 10263247 | B2 | 16 April 2019 |
| | | | | US | 2018-0159118 | A1 | 07 June 2018 |
| KR | 10-1607794 | B1 | 30 March 2016 | CN | 104169215 | A | 26 November 2014 |
| | | | | CN | 104169215 | B | 14 December 2016 |
| | | | | CN | 201805940 | U | 27 April 2011 |
| | | | | JP | 2015-141041 | A1 | 03 August 2015 |
| | | | | JP | 5859114 | B2 | 10 February 2016 |
| | | | | KR | 10-2014-0112491 | A | 23 September 2014 |
| | | | | WO | 2013-141041 | A1 | 26 September 2013 |
| KR | 10-2022-0092450 | A | 01 July 2022 | CN | 116711100 | A | 05 September 2023 |
| | | | | EP | 4261938 | A1 | 18 October 2023 |
| | | | | WO | 2022-139311 | A1 | 30 June 2022 |

Form PCT/ISA/210 (patent family annex) (July 2022)

**EP 4 443 564 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220116896
- KR 1020230062320
- KR 1020150028457
- KR 1020160125720